# EUROPÄISCHE PATENTSCHRIFT

(11) **EP 1 366 305 B1**
(45) Veröffentlichungstag und Bekanntmachung des Hinweises auf die Patenterteilung: **12.04.2006**
(21) Anmeldenummer: 02712895.8
(22) Anmeldetag: 06.02.2002
(51) Int. Cl.: F16C 19/10, F16C 19/30, F16C 25/06, F16C 25/08

(54) **AXIALLAGER**
THRUST BEARING
PALIER DE BUTEE

(30) Priorität: 09.03.2001 DE 10111514; 23.06.2001 DE 10130458
(43) Veröffentlichungstag der Anmeldung: 03.12.2003
(73) Patentinhaber: Schaeffler KG, 91074 Herzogenaurach (DE)
(72) Erfinder: MEIER, Peter, 91097 Oberreichenbach (DE); OETJEN, Jürgen, 91074 Herzogenaurach (DE)
(86) Internationale Anmeldenummer: PCT/EP2002/001202
(87) Internationale Veröffentlichungsnummer: WO 2002/073049

(56) Entgegenhaltungen:
- BE-A- 374 162
- DE-B- 1 195 558
- DE-C- 384 819
- FR-A- 1 339 266
- US-A- 3 144 278
- US-A- 3 650 583
- US-A- 3 830 553
- US-A- 4 269 460

## Beschreibung

### Anwendungsgebiet der Erfindung

Die Erfindung betrifft ein Axiallager, bei dem zwei benachbart angeordnete Wälzkörperkränze zwischen einer mittleren und zwei äußeren Laufscheiben abrollen, wobei sich die beiden Wälzkörperkränze mit ihrer Aufnahmebohrung auf einer fest mit einer Welle verbundenen Hülse abstützen und die mittlere Laufscheibe auf der Hülse drehbar angeordnet ist.

### Hintergrund der Erfindung

Ein solch gattungsgemäß ausgebildetes doppelreihiges Axialwälzlager ist aus Figur 5 der DE-OS 20 44 074 vorbekannt. Es besteht aus einer fest mit einer Welle verbundenen Hülse, an deren beiden Stirnseiten zwei äußere Laufscheiben anliegen, während die mittlere Laufscheibe zwischen beiden liegend, die Hülse umfassend, drehbar angeordnet ist. Der Zusammenhalt dieses Axiallagers wird durch einen keilförmigen geteilten Ring bewerkstelligt, der in eine ebenfalls keilförmig ausgebildeten Nut auf der Welle eingeschnappt ist.

Nachteilig dabei ist, dass der keilförmige Ring und die zugehörige Wellennut sehr genau gefertigt sein müssen, um eine gewünschte axiale Vorspannung einstellen zu können. Ein weiterer Nachteil liegt darin, dass eine solche Lageranordnung nicht als komplette Baueinheit vorfertigbar, sondern in ihre einzelnen Bestandteile zerlegt zum Anwender gelangt.

### Zusammenfassung der Erfindung

Der Erfindung liegt daher die Aufgabe zu Grunde, ein gattungsgemäßes Axiallager konstruktiv so zu verbessern, dass es sich wesentlich einfacher fertigen lässt.

Erfindungsgemäß für diese Aufgabe nachdem kennzeichnenden Teil von Anspruch 1 dadurch gelöst, dass sich die Hülse in axialer Richtung über die beiden Laufscheiben hinaus erstreckt, an einem Ende einen radial nach außen gerichteten Flansch aufweist, der die benachbart angeordnete erste Laufscheibe umfasst und dass die zweite Laufscheibe fest mit der Hülse verbunden ist, so dass eine vorgespannte Lagerbaueinheit gebildet ist.

Durch die erfindungsgemäße Ausbildung des Axiallagers ist sichergestellt, dass es in sehr einfacher Weise durch Steckmontage gefertigt und mit der gewünschten Lagervorspannung versehen werden kann. Die so vorgefertigte, kompakte Lagerbaueinheit kann ohne auseinanderzufallen zum Anwender transportiert werden, der es in einfacher und unkomplizierter Weise in seine Anschlusskonstruktion einfügt.

Vorteilhafte Ausführungen der Erfindung sind in den Unteransprüchen 2 bis 8 beschrieben.

Eine Ausführungsvariante gemäß Anspruch 2 sieht vor, dass die zweite Laufscheibe L-förmig ausgebildet ist, mit ihrem kurzen Schenkel auf die Hülse aufgeschoben und mit dieser verstemmt, verklebt oder über eine Schweißverbindung verbunden ist.

Eine besonders vorteilhafte Ausführungsvariante geht aus Anspruch 3 hervor, danach soll die zweite Laufscheibe in axialer Richtung von einem federnden Klemmring beaufschlagt sein, der sich auf der Hülse abstützt. Diese Variante ist in besonders einfacher Weise herstellbar. Es hat sich dabei als vorteilhaft erwiesen, wenn nach Anspruch 4 der Klemmring aus einem härteren Material als die Hülse besteht. Dadurch ist sichergestellt, dass sich der federnde Klemmring ähnlich einem Messer in die Hülse eingraben kann und so für einen festen axialen Zusammenhalt der Baueinheit sorgt.

Nach den Ansprüchen 5 und 6 ist vorgesehen, dass die mittlere Laufscheibe einen Durchmesser aufweist, der über dem Durchmesser der äußeren Laufscheiben liegt, wobei die mittlere Laufscheibe wenigstens mit einer durchgehenden Befestigungsbohrung versehen ist. Dies hat den Vorteil, dass die gesamte Lagerbaueinheit in unkomplizierter Weise mit einer Anschlusskonstruktion verbunden werden kann.

Nach einem weiteren zusätzlichen Merkmal gemäß Anspruch 7 sollen die Hülse und die Laufscheiben durch einen spanlosen Formgebungsvorgang hergestellt sein. Auf diese Weise ist es möglich, unterschiedlich gestaltete Axiallager in verschiedenen Größen den jeweiligen Anwendungsfällen angepasst in einfacher und kostengünstiger Weise herzustellen.

Schließlich sollen nach Anspruch 8 die Wälzkörperkränze als Rollen- oder als Kugelkränze ausgebildet sein.

Die Erfindung wird an nachstehenden Ausführungsbeispielen näher erläutert.

### Kurze Beschreibung der Zeichnungen

Es zeigen:
- Figur 1: einen Längsschnitt durch ein erfindungsgemäßes Axiallager,
- Figur 2: eine Seitenansicht des Axiallagers gemäß Figur 1
- Figur 3: einen weiteren Längsschnitt durch ein Axiallager,
- Figur 4: eine Draufsicht auf einen Klemmring,
- Figur 5: einen Längsschnitt durch den Klemmring entlang der Linie V - V in Figur 4 und
- Figur 6: einen Längsschnitt durch ein Axiallager

### Ausführliche Beschreibung der Zeichnungen

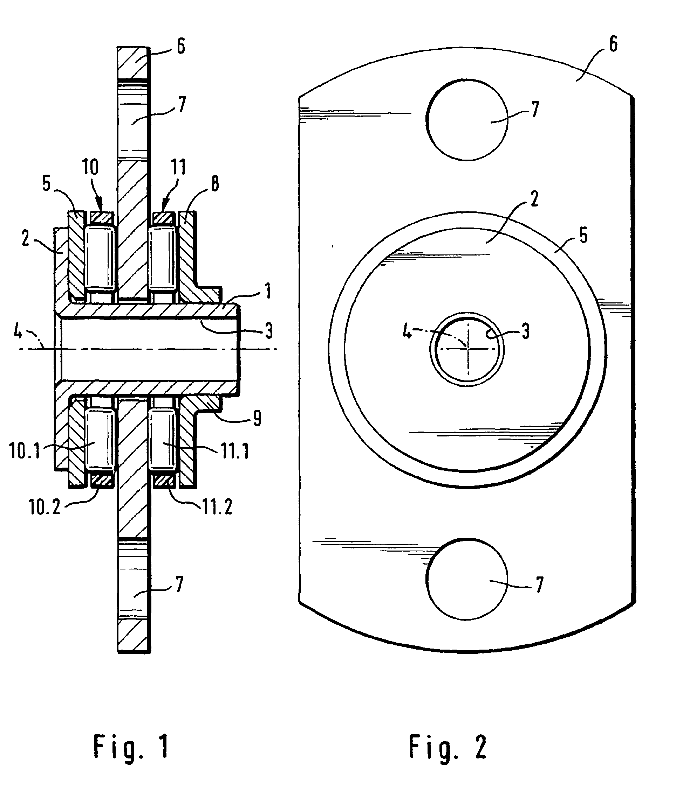

Das in den Figuren 1 und 2 gezeigte doppelreihige Axiallager weist die Hülse 1 auf, die am linksseitigen Ende mit dem radial nach außen weisenden Flansch 2 versehen ist und die mit ihrer Aufnahmebohrung 3 auf eine nicht dargestellte Welle drehfest aufgeschoben wird und um ihre Längsmittelachse 4 rotiert. Die Hülse 1 umfasst mit dem Flansch 2 die erste äußere Laufscheibe 5. An diese schließt sich der aus Lagernadeln 10.1 und dem Käfig 10.2 bestehende Rollenkranz 10 an. Danach folgt die mit durchgehenden Befestigungsbohrungen 7 versehene mittlere Laufscheibe 6, an die sich in axialer Richtung der aus Lagernadeln 11.1 und Käfig 11.2 bestehende Rollenkranz 11 anschließt. Den Abschluss der kompletten Axiallagerbaueinheit bildet die zweite äußere Laufscheibe 8, die mit ihrem kurzen Schenkel 9 auf die Hülse 1 aufgeschoben ist und nach Einstellung der gewünschten axialen Vorspannung mit dieser fest verbunden ist. Dies kann beispielsweise durch Kleben, Verstemmen oder auch durch Schweißen erfolgen. Die Montage des Lagers erfolgt derart, dass auf die mit dem Flansch 2 versehene Hülse 1 zunächst die erste äußere Laufscheibe 5 aufgeschoben wird, danach der Rollenkranz 10, dem die mittlere Laufscheibe 6 folgt, der sich wiederum der Rollenkranz 11 anschließt, dem wiederum die zweite äußere Laufscheibe 8 folgt. Die derart zusammengefügte komplette Axiallagereinheit wird jetzt in einer Montagevorrichtung mit einer axialen Druckkraft entsprechend der gewünschten axialen Vorspannung beaufschlagt, bevor die zweite äußere Laufscheibe 8 fest mit der Hülse 1 verbunden wird.

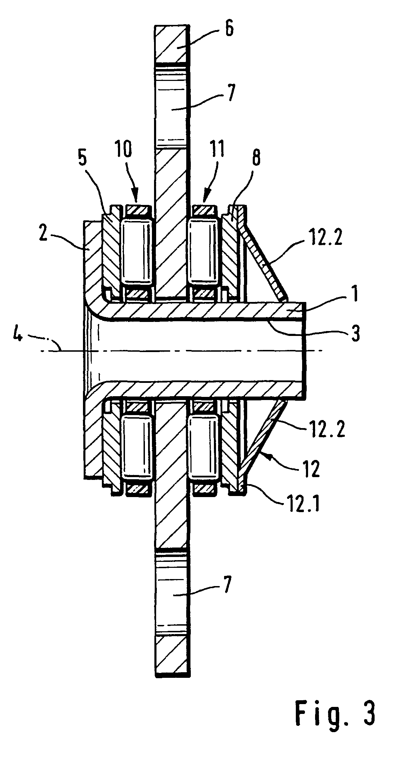

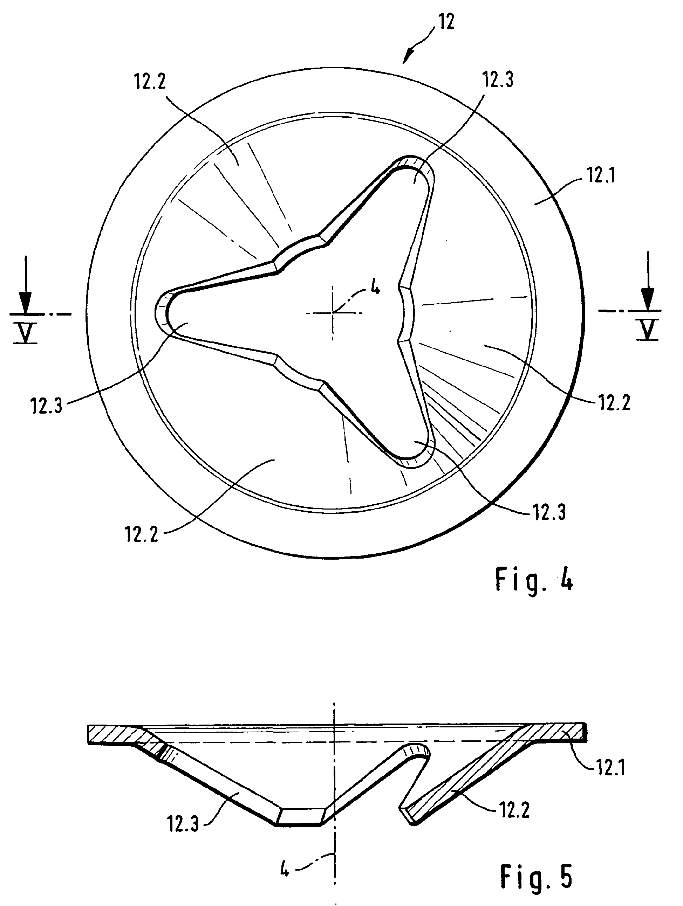

Die in Figur 3 gezeigte Lageranordnung unterscheidet sich von der in Figur 1 lediglich dadurch, dass die zweite äußere Laufscheibe 8 nicht L-förmig ausgebildet ist und mit Hilfe des in den Figuren 4 und 5 dargestellten federnden Klemmringes 12 auf der Hülse 1 fixiert wird. Dieser besteht aus dem kreisringartigen Basisteil 12.1, das die zweite äußere Laufscheibe 8 außen umfasst und das in radialer Richtung nach innen von voneinander beabstandeten Lappen 12.2 fortgesetzt wird. Diese federnden Lappen 12.2 sind durch Durchbrüche 12.3 voneinander getrennt und verlaufen unter einem Winkel geneigt in Richtung der Längsmittelachse 4. Auf diese Weise ist sichergestellt, dass sich die radial innen liegenden Enden der Lappen 12.2 in die äußere Mantelfläche der Hülse 1 eingraben können und so die gewünschte Axiallagervorspannung einstellen.

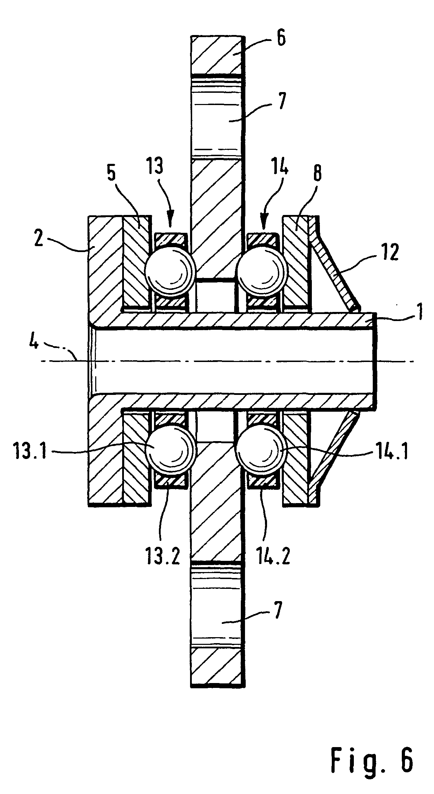

Das in Figur 6 gezeigte Axiallager unterscheidet sich von dem in Figur 3 lediglich dadurch, dass die Wälzkörperkränze als Kugelkränze 13, 14 ausgebildet sind, deren Lagerkugeln 13.1, 14.1 im Käfig 13.2, 14.2 angeordnet sind. Bedingt durch den ansonsten gleichen Aufbau sind für gleiche Bestandteile auch die gleichen Bezugszeichen verwendet worden. Kugelkränze 13, 14 haben gegenüber Rollenkränzen 10, 11 den Vorteil einer verminderten Reibleistung.

### Bezugszahlenliste

- 1: Hülse
- 2: Flansch
- 3: Aufnahmebohrung
- 4: Längsmittelachse
- 5: erste äußere Laufscheibe
- 6: mittlere Laufscheibe
- 7: Befestigungsbohrung
- 8: zweite äußere Laufscheibe
- 9: Schenkel
- 10: Rollenkranz
- 10.1: Lagernadel
- 10.2: Käfig
- 11: Rollenkranz
- 11.1: Lagernadel
- 11.2: Käfig
- 12: Klemmring.
- 12.1: Basisteil
- 12.2: Lappen
- 12.3: Durchbruch
- 13: Kugelkranz
- 13.1: Lagerkugel
- 13.2: Käfig
- 14: Kugelkranz
- 14.1: Lagerkugel
- 14.2: Käfig

## Patentansprüche

1. Axiallager, bei dem zwei benachbart angeordnete Wälzkörperkränze zwischen einer mittleren Laufscheibe und zwei äußeren Laufscheiben abrollen, wobei sich die beiden Wälzkörperkränze mit ihrer Aufnahmebohrung auf einer fest mit einer Welle verbundenen Hülse abstützen und die mittlere Laufscheibe auf der Hülse drehbar angeordnet ist, **dadurch gekennzeichnet, dass** sich die Hülse (1) in axialer Richtung über die beiden Laufscheiben (5,8) hinaus erstreckt, an einem Ende einen radial nach außen gerichteten Flansch (2) aufweist, der die benachbart angeordnete erste Laufscheibe (5) umfasst und dass die zweite Laufscheibe (8) fest mit der Hülse (1) verbunden ist, so dass eine vorgespannte Lagerbaueinheit gebildet ist.

2. Axiallager nach Anspruch 1, **dadurch gekennzeichnet, dass** die zweite Laufscheibe (8) L-förmig ausgebildet ist, mit ihrem kurzen Schenkel (9) auf die Hülse (1) aufgeschoben und mit dieser verstemmt, verklebt oder über eine Schweißverbindung verbunden ist.

3. Axiallager nach Anspruch 1, **dadurch gekennzeichnet, dass** die zweite Laufscheibe (8) in axialer Richtung von einem federnden Klemmring (12) beaufschlagt ist, der sich auf der Hülse (1) abstützt.

4. Axiallager nach Anspruch 3, **dadurch gekennzeichnet, dass** der Klemmring (12) aus einem härteren Material als die Hülse (1) besteht.

5. Axiallager nach Anspruch 1, **dadurch gekennzeichnet, dass** die mittlere Laufscheibe (6) einen Durchmesser aufweist, der über dem Durchmesser der äußeren Laufscheiben (5,8) liegt.

6. Axiallager nach Anspruch 1, **dadurch gekennzeichnet, dass** die mittlere Laufscheibe (6) wenigstens mit einer durchgehenden Befestigungsbohrung (7) versehen ist.

7. Axiallager nach Anspruch 1, **dadurch gekennzeichnet, dass** die Hülse (1) und die Laufscheiben (5,6,8) durch einen spanlosen Formgebungsvorgang hergestellt sind.

8. Axiallager nach Anspruch 1, **dadurch gekennzeichnet, dass** die Wälzkörperkränze als Rollen- (10, 11) oder als Kugelkränze (13, 14) ausgebildet sind.

## Claims

1. Axial bearing, in which two roller-body rings which are arranged next to one another roll between a central runner plate and two outer runner plates, the two roller-body rings being supported by way of their receptacle hole on a sleeve which is connected fixedly to a shaft, and the central runner plate being arranged rotatably on the sleeve, **characterized in that** the sleeve (1) extends in the axial direction beyond the two runner plates (5, 8) and has a radially outwardly directed flange (2) at one end, which flange (2) encloses the first runner plate (5) which is arranged adjacent to it, and **in that** the second runner plate (8) is connected fixedly to the sleeve (1), with the result that a prestressed bearing structural unit is formed.

2. Axial bearing according to Claim 1, **characterized in that** the second runner plate (8) is of L-shaped configuration, is pushed onto the sleeve (1) by way of its short limb (9) and is caulked, adhesively bonded or connected via a welded connection to the latter.

3. Axial bearing according to Claim 1, **characterized in that** the second runner plate (8) is acted on in the axial direction by a resilient clamping ring (12) which is supported on the sleeve (1).

4. Axial bearing according to Claim 3, **characterized in that** the clamping ring (12) is composed of a harder material than the sleeve (1).

5. Axial bearing according to Claim 1, **characterized in that** the central runner plate (6) has a diameter which is greater than the diameter of the outer runner plates (5, 8).

6. Axial bearing according to Claim 1, **characterized in that** the central runner plate (6) is provided at least with a continuous fastening hole (7).

7. Axial bearing according to Claim 1, **characterized in that** the sleeve (1) and the runner plates (5, 6, 8) are manufactured by a shaping process without cutting.

8. Axial bearing according to Claim 1, **characterized in that** the roller-body rings are configured as roller rings (10, 11) or as ball races (13, 14).

## Revendications

1. Palier de butée, dans lequel deux couronnes de corps de roulement disposées à proximité roulent entre un disque de roulement central et deux disques de roulement extérieurs, dans lequel les deux couronnes de corps de roulement prennent appui avec leur alésage de réception sur une douille assemblée fixement à un arbre et le disque de roulement central est disposé de façon rotative sur la douille, **caractérisé en ce que** la douille (1) s'étend en direction axiale au-delà des deux disques de roulement (5, 8), présente à une extrémité une bride (2) orientée radialement vers l'extérieur, qui comprend le premier disque de roulement disposé à proximité (5), et **en ce que** le deuxième disque de roulement (8) est assemblé fixement à la douille (1), de telle manière qu'il se forme une unité de palier précontrainte.

2. Palier de butée selon la revendication 1, **caractérisé en ce que** le deuxième disque de roulement (8) est en forme de L, avec sa branche courte (9) glissée sur la douille (1) et calée, collée ou assemblée par un assemblage soudé sur celle-ci.

3. Palier de butée selon la revendication 1, **caractérisé en ce que** le deuxième disque de roulement (8) est poussé en direction axiale par une bague de serrage élastique (12) qui s'appuie sur la douille (1).

4. Palier de butée selon la revendication 3, **caractérisé en ce que** la bague de serrage (12) est constituée d'une matière plus dure que la douille (1).

5. Palier de butée selon la revendication 1, **caractérisé en ce que** le disque de roulement central (6) présente un diamètre, qui est supérieur au diamètre des disques de roulement extérieurs (5, 8).

6. Palier de butée selon la revendication 1, **caractérisé en ce que** le disque de roulement central (6) est pourvu d'au moins un alésage de fixation traversant (7).

7. Palier de butée selon la revendication 1, **caractérisé en ce que** la douille (1) et les disques de roulement (5, 6, 8) sont fabriqués par un procédé de formage sans enlèvement de copeaux.

8. Palier de butée selon la revendication 1, **caractérisé en ce que** les couronnes de corps de roulement sont constituées de couronnes de rouleaux (10, 11) ou de billes (13, 14).
